# FASCICULE DE BREVET EUROPEEN

(11) **EP 3 724 523 B1**
(45) Date de publication et mention de la délivrance du brevet: **21.06.2023**
(21) Numéro de dépôt: 18833919.6
(22) Date de dépôt: 11.12.2018
(51) Int. Cl.: F16B 37/06, F16B 19/08, F16B 19/06

(54) **DISPOSITIF DE FIXATION, ENSEMBLE DE FIXATION COMPRENANT UN TEL DISPOSITIF ET PROCEDE DE FABRICATION D'UN TEL ENSEMBLE**
BEFESTIGUNGSVORRICHTUNG, BEFESTIGUNGSANORDNUNG MIT EINER SOLCHEN VORRICHTUNG UND VERFAHREN ZUR HERSTELLUNG EINER SOLCHEN ANORDNUNG
ATTACHMENT DEVICE, ATTACHMENT ASSEMBLY COMPRISING SUCH A DEVICE AND METHOD FOR PRODUCING SUCH AN ASSEMBLY

(30) Priorité: 11.12.2017 FR 1761932
(43) Date de publication de la demande: 21.10.2020
(73) Titulaire: Bollhoff Otalu, 73490 La Ravoire (FR)
(72) Inventeur: BERLIRE, Emmanuelle, 73190 Challes-les-Eaux (FR); FAGUER, Sylvain, 73800 Arbin (FR); ROUSSEAUX, Philippe, 73190 St Baldoph (FR)
(74) Mandataire: Talbot, Alexandre
(86) Numéro de dépôt international: PCT/FR2018/053210
(87) Numéro de publication internationale: WO 2019/115935

(56) Documents cités:
- EP-A1- 2 947 336
- DE-A1-102014 206 787
- FR-A1- 2 374 143
- JP-A- H1 061 628

## Description

### Domaine technique de l'invention

L'invention concerne les dispositifs de fixation, et plus particulièrement les dispositifs de fixation adaptés pour des supports en matériau composite.

### État de la technique

Actuellement, on a de plus en plus besoin de fixer des pièces sur des supports en matériau composite. On entend par matériau composite, un matériau comprenant une matrice réalisée à partir d'un matériau thermoplastique, tels que les polyoléfines, les polyamides ou les polypropylènes, ou d'un matériau thermodurcissable, tels que les polyesters insaturés, les polyépoxydes ou les polyuréthanes. Un matériau composite peut comprendre des renforts réalisés dans un matériau distinct de la matrice, par exemple des fibres de verre, de carbone, d'aramide, ou autres, pris seuls ou en combinaison. De manière générale, on fixe une pièce sur un support à l'aide d'un insert préalablement fixé sur le support. Un insert peut être un écrou, un rivet, une vis ou un goujon, ou encore un insert ayant une fonction entretoise ou une fonction rotule. Un écrou est un élément creux taraudé, c'est-à-dire qui comporte un filetage interne, destiné à être fixée à une pièce filetée. Un rivet est un élément d'assemblage de pièces plates. Une vis ou goujon est un élément fileté, c'est-à-dire qui comporte un filetage externe apte à recevoir le filetage interne d'une pièce à fixer au support. Un insert à fonction entretoise permet de maintenir un écartement constant entre la pièce et le support. Un insert à fonction rotule comporte une tête sphérique pour, notamment, offrir une liaison rotule.

Ces inserts destinés à être fixés sur des supports en matériau composite doivent être adaptés pour résister à des forces de traction et de cisaillement afin de garantir une bonne tenue de la liaison mécanique entre le support sur lequel ils sont fixés et la pièce que l'on souhaite fixer à l'insert, c'est-à-dire au support.

Il existe des inserts dont le corps est noyé dans une résine thermoplastique ou thermodurcissable. Certains inserts comportent un corps s'étendant le long d'un axe longitudinal, tel un fût, et une embase soudée ou sertie à une extrémité du corps. L'embase a une forme d'une plaque circulaire ou parallélépipédique. L'embase est en outre perforée, c'est-à-dire que plusieurs orifices circulaires traversants sont formés dans l'embase. Les orifices circulaires sont destinés à laisser pénétrer des fibres de renfort et de la résine de manière à créer des zones d'accroche et de renfort. Ces inserts ont leur embase intégrée dans le support. Le support est moulé en injectant une résine sur l'insert de manière à noyer l'embase dans la résine pour fixer mécaniquement l'insert au support lorsque la résine durcie. En général, la résine est un matériau fluide qui peut durcir sous l'effet de la chaleur et qui est réalisée à partir de polyester et de fibres de verre. Mais ces inserts nécessitent une préparation préalable pour l'assemblage du corps et de l'embase. En particulier, lorsque l'insert est réalisé à partir d'un matériau différent de la résine, par exemple en acier, une bonne tenue mécanique entre l'insert et le support est difficile à obtenir. En effet, la pénétration de la résine dans les orifices circulaires est aléatoire, et dans ce cas les fibres de renfort ne se répartissent pas suffisamment autour de l'embase. L'insert est alors mal ancré au sein du support moulé.

On peut citer la demande de brevet français FR3021899 qui divulgue une plaque constituée d'un matériau composite à renforts fibreux dans une matrice constituée d'un polymère thermoplastique, et une pièce métallique comportant une interface mécanique pour réaliser des fonctions techniques de l'articulation, telles qu'une liaison pivot ou une indexation angulaire. La pièce métallique comporte en outre un plateau comprenant une pluralité de picots cylindriques sensiblement perpendiculaires au plateau et qui pénètrent dans la plaque pour lier la pièce métallique à la plaque. Par ailleurs, des trous à bords tombés peuvent être réalisés dans le plateau, et forment des motifs d'accouplement qui pénètre dans la plaque.

Mais ces inserts n'offrent pas une tenue mécanique suffisante avec le support. Si ces inserts sont performants en travail de couple et de cisaillement, ils n'offrent pas une tenue mécanique axiale suffisante avec le support si ce dernier est soumis à de forts efforts en flexion.

On peut citer, par exemple, la demande de brevet français FR3013253, déposée au nom de la demanderesse, qui divulgue un insert destiné à être inclus dans une pièce moulée par injection, comprenant un corps s'étendant le long d'un axe longitudinal et une embase située à une extrémité du corps et dans laquelle plusieurs orifices traversants sont formés et sont orientés selon une direction inclinée par rapport à l'axe longitudinal, afin d'améliorer la pénétration des fibres de renfort lors de l'injection de la résine. Mais ces inserts sont destinés aux pièces réalisées par moulage d'une résine par injection. Ils ne sont pas adaptés aux procédés de montage d'un insert dans un support par perçage du support.

On peut en outre citer la demande de brevet français FR3017316, déposée au nom de la demanderesse, qui divulgue un procédé d'assemblage d'un insert sur un support, comprenant un appareil muni d'une broche montée à rotation, et comprenant un montage de l'insert sur l'appareil en passant la broche à travers un trou traversant de l'insert, puis un perçage par friction à chaud d'un orifice dans le support en mettant en rotation la broche autour d'un axe de rotation et en translatant la broche selon l'axe de rotation pour exercer une pression de la broche contre le support, de manière à former, à partir de la matière du support percé, un manchon autour de l'orifice, puis une soudure de l'insert au manchon en exerçant une pression de l'insert contre le manchon. Mais le montage de l'insert au support nécessite d'utiliser une broche animée en rotation pour percer le support. L'appareil sur lequel est montée la broche est donc complexe. En outre, l'insert doit être obligatoirement muni d'un trou traversant pour laisser passer la broche. Un tel procédé ne permet pas de fixer un insert borgne sur un support.

Le document EP2947336 divulgue un écrou aveugle avec un filetage interne. L'écrou aveugle comprend une partie tubulaire creuse adjacente au filetage interne et une bride.

Une portion de la partie tubulaire peut être déformée plastiquement de manière à augmenter son diamètre, et fixer l'écrou à une pièce de fixation. La partie avec le filetage interne comprend une première partie droite adjacente à la partie tubulaire, une première portion conique dont le diamètre extérieur diminue progressivement à partir de la première partie droite ainsi qu'une deuxième partie droite dont le diamètre extérieur est inférieur à la première partie droite, une deuxième partie conique avec un diamètre extérieur progressif décroissant à partir de la première partie droite, et une troisième partie droite avec un diamètre extérieur plus petit que la deuxième partie droite.

Le document DE 10 2014 206787 divulgue un rivet poinçon semi-tubulaire pour l'assemblage de pièces sans pré-perçage. Le rivet comprend une tête de rivet et une tige de rivet adjacente. La tige du rivet définit un évidement concentrique et une base de rivet avec un bord poinçonné. Le pied du rivet a un diamètre extérieur plus grand que le reste de la tige du rivet.

Le document JP H10 61628 divulgue un élément possédant une tête hémisphérique ou trapézoidale surmontée par une tige et terminée par une pointe. La pointe possède deux portions ayant chacune un angle différent par rapport à l'axe longitudinal. La pointe est définie par une portion tronconique et une portion conique. Le document FR 2 734 143 divulgue d'un boitier de cloutage pyrotechnique avec un clou de fixation possédant une pointe conique suivie d'une portion tronconique et d'une section circulaire

### Objet de l'invention

Un objet de l'invention consiste à pallier ces inconvénients, et plus particulièrement à fournir un moyen pour fixer un insert sur un support en matériau composite en garantissant une bonne tenue mécanique entre l'insert et le support, et plus particulièrement un moyen pour fixer l'insert par perçage du support.

Selon un aspect de l'invention, il est proposé un dispositif de fixation selon la revendication 1, comprenant un fût s'étendant le long d'un axe longitudinal et une extrémité distale comportant un premier tronçon adjacent au fût et ayant une surface extérieure inclinée selon un premier angle par rapport à l'axe longitudinal.

L'extrémité distale comporte un deuxième tronçon adjacent au premier tronçon et ayant une surface extérieure inclinée selon un deuxième angle par rapport à l'axe longitudinal, les surfaces extérieures respectives des premier et deuxième tronçons s'évasant selon une même direction et les premier et deuxième angles ayant des valeurs respectives différentes.

Ainsi, on fournit un dispositif de fixation dont une extrémité est particulièrement adaptée pour fixer le dispositif de fixation à un support en matériau composite par perçage du support. L'extrémité forme une pointe convexe ou concave qui facilite le perçage du support. Un tel dispositif de fixation peut être utilisé en perçant le support par une translation du dispositif et en exerçant une force de pression suffisante. On évite d'avoir à animer en rotation le dispositif pour effectuer le perçage.

Les premier et deuxième tronçons peuvent avoir une surface extérieure tronconique.

Selon un mode de réalisation, les surfaces extérieures tronconiques des premier et deuxième tronçons peuvent s'évaser en direction du fût et le deuxième angle est strictement supérieur au premier angle.

Selon un mode de réalisation, le dispositif comporte une extrémité proximale opposée à l'extrémité distale, les surfaces extérieures tronconiques des premier et deuxième tronçons pouvant s'évaser selon une direction opposée à l'extrémité proximale et le deuxième angle étant strictement inférieur au premier angle.

Le fût comporte un tronçon de dégagement, des rainures s'étendant le long de l'axe longitudinal étant formées sur une surface extérieure du tronçon de dégagement.

Les rainures facilitent l'insertion du dispositif de fixation au sein d'un support en matériau composite.

Le fût est creux et le tronçon de dégagement comporte un filetage situé sur une surface intérieure du tronçon de dégagement.

Le dispositif peut comporter une tête d'appui adjacente au fût et située à l'opposé de l'extrémité distale, le fût comportant, un tronçon de sertissage s'étendant entre la tête d'appui et le tronçon de dégagement et étant déformable pour former un bourrelet de sertissage, un tronçon de séparation s'étendant entre la tête d'appui et le tronçon de sertissage, et un épaulement formé entre le tronçon de séparation et le tronçon de sertissage.

La tête d'appui peut s'étendre radialement par rapport à l'axe longitudinal et a une longueur en saillie du tronçon de séparation inférieure à une longueur du tronçon de séparation s'étendant le long de l'axe longitudinal.

Le dispositif peut être creux dans lequel un orifice traversant est formé au sein de l'extrémité distale.

Selon un autre aspect, il est proposé un ensemble de fixation comprenant un support et un dispositif de fixation, tel que défini ci-avant, monté sur le support.

Selon encore un autre aspect, il est proposé un procédé de fabrication d'un ensemble de fixation, tel que défini ci-avant, comprenant un perçage du support de l'ensemble par une introduction du dispositif de fixation de l'ensemble au sein du support.

Le perçage peut comporter un chauffage du support de l'ensemble.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une vue latérale d'un mode de réalisation d'un dispositif de fixation selon l'invention ;
- la figure 2, illustre schématiquement une vue de dessous du dispositif illustré à la figure 1 ;
- la figure 3, illustre de façon schématique une vue en coupe d'un autre mode de réalisation du dispositif de fixation ;
- la figure 3b, illustre schématiquement une vue en coupe d'encore un autre mode de réalisation du dispositif de fixation ;
- la figure 4, illustre de façon schématique une vue en perspective du mode de réalisation du dispositif de fixation illustré à la figure 3 ;
- la figure 5, illustre schématiquement une vue latérale d'un exemple non couvert par le texte des revendications
- les figures 6 à 9, illustrent de façon schématique des vues en coupe des principales étapes d'un mode de mise en oeuvre d'un procédé de fabrication d'un ensemble de fixation ; et
- la figure 10, illustre schématiquement une vue en coupe d'un autre mode de mise en oeuvre du procédé de fabrication d'un ensemble de fixation.

### Description détaillée

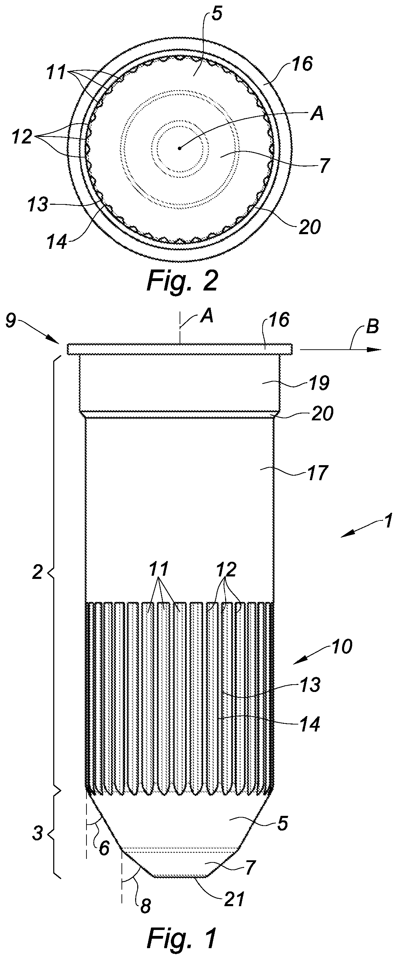

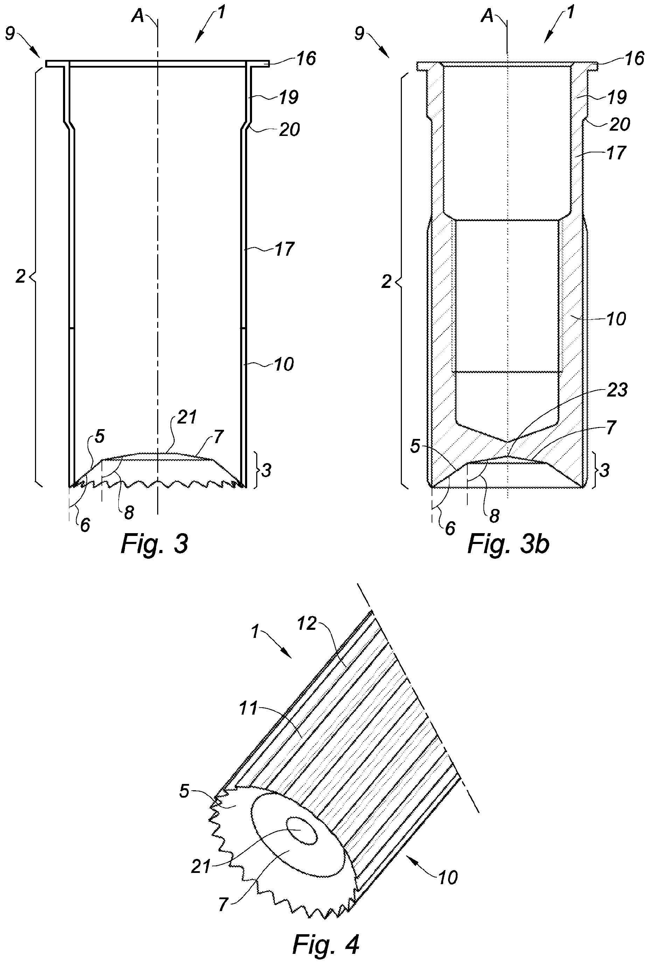

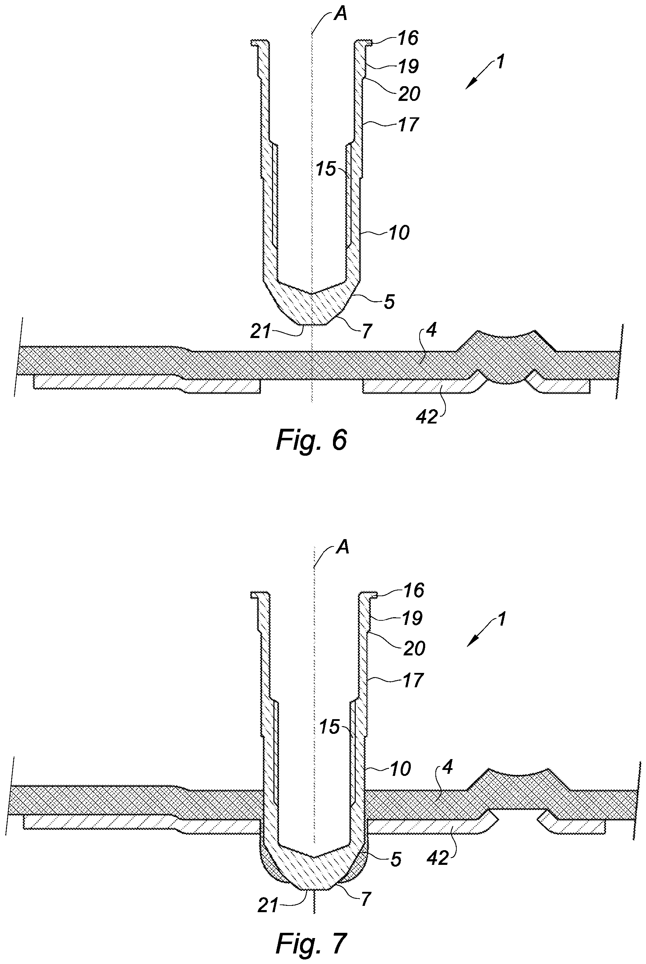

Sur les figures 1 à 10, on a représenté un dispositif de fixation 1, ou insert, comprenant un fût 2 et une extrémité distale 3. Le dispositif 1 est destiné à être monté sur un support 4 en matériau composite, comme illustré sur les figures 6 à 10. En outre, le dispositif 1 est particulièrement adapté pour être introduit au sein d'un tel support 4 par perçage du support 4. Le fût 2 s'étend le long d'un axe longitudinal A. L'extrémité distale 3 est située à une terminaison du fût 2. L'extrémité distale 3 comporte un premier tronçon 5 adjacent au fût 2 et ayant une surface extérieure inclinée selon un premier angle 6 par rapport à l'axe longitudinal A. Le premier angle 6 correspond au secteur angulaire situé entre la surface extérieure du premier tronçon 5 et l'axe longitudinal A et qui est visible depuis l'extérieur du dispositif de fixation 1. Plus précisément, le premier angle 6 correspond à l'angle complémentaire adjacent à l'angle entre une droite normale à la surface extérieure du premier tronçon 5 et l'axe longitudinal A. En outre, l'extrémité distale 3 comporte un deuxième tronçon 7 adjacent au premier tronçon 5 et ayant une surface extérieure inclinée selon un deuxième angle 8 par rapport à l'axe longitudinal A. Le deuxième angle 8 correspond au secteur angulaire situé entre la surface extérieure du deuxième tronçon 7 et l'axe longitudinal A et qui est visible depuis l'extérieur du dispositif de fixation 1. Plus précisément, le deuxième angle 8 correspond à l'angle complémentaire adjacent à l'angle entre une droite normale à la surface extérieure du deuxième tronçon 7 et l'axe longitudinal A. Plus particulièrement, les surfaces extérieures respectives des premier et deuxième tronçons 5, 7 s'évasent selon une même direction. La direction peut correspondre à l'orientation du fût 2 vers l'extrémité distale 3, comme illustré sur les figures 3, 3b et 4, ou à l'orientation opposée, comme illustré sur les figures 1, 2 et 5 à 10. En outre, les premier et deuxième angles 6, 8 ont des valeurs respectives différentes. Ainsi, on obtient une extrémité distale 3 ayant deux tronçons 5, 7 inclinés différemment pour faciliter le perçage d'un support 4 en matériau composite par le dispositif 1. Par exemple, les premier et deuxième tronçons 5, 7 ont chacun une surface extérieure tronconique, ce qui facilite la fabrication du dispositif 1. En outre, le fût 2 comporte une extrémité proximale 9 située à l'opposé de l'extrémité distale 3.

Selon un premier mode de réalisation, illustré aux figures 1 et 2, les surfaces extérieures des premier et deuxième tronçons 5, 7 sont respectivement tronconiques et s'évasent en direction du fût 2. En outre, le deuxième angle 8 a une valeur strictement supérieure à celle du premier angle 6. Selon ce premier mode de réalisation, les premier et deuxième angles 6, 8 sont aigus. Avantageusement, le premier angle 6 a une valeur comprise entre 30° et 45° et le deuxième angle 8 a une valeur comprise entre 50° et 55°. L'inclinaison du deuxième tronçon 7 permet de prendre appui sur le support 4 sans couper les fibres de renfort. Le premier tronçon 5 permet d'écarter les fibres de renfort lors du perçage du support 4 par le dispositif 1.

Selon un deuxième mode de réalisation, illustré sur les figures 3 et 4, les surfaces extérieures des premier et deuxième tronçons 5, 7 sont respectivement tronconiques et s'évasent selon une direction opposée à l'extrémité proximale 9. Par ailleurs, le deuxième angle 8 a une valeur strictement inférieure à celle du premier angle 6. Selon ce deuxième mode de réalisation, les premier et deuxième angles 6, 8 sont obtus. Avantageusement, le premier angle 6 a une valeur comprise entre 135° et 150° et le deuxième angle 8 a une valeur comprise entre 125° et 130°.

Selon un troisième mode de réalisation, illustré sur la figure 3b, les surfaces extérieures des premier et deuxième tronçons 5, 7 sont respectivement tronconique et conique et s'évasent selon une direction opposée à l'extrémité proximale 9. Les premier et deuxième angles 6, 8 sont obtus.

Le fût 2 peut en outre comporter un tronçon de dégagement 10. Des rainures 11 s'étendant le long de l'axe longitudinal A sont formées sur une surface extérieure du tronçon de dégagement 10. Les rainures 11 correspondent à des entailles longues ouvertes vers l'extérieur du dispositif 1, c'est-à-dire qu'un fond d'une rainure 11 est visible depuis l'extérieur du dispositif 1. Les rainures 11 ont une section en partie rectangulaire, ou en forme de queue d'aronde, ou en partie parallélépipédique, ou encore en partie sphérique. En particulier, les rainures 11 sont débouchantes au niveau de la jonction entre le tronçon de dégagement 10 et l'extrémité distale 3. Des parties externes 12 de la surface extérieure du tronçon de dégagement 10 situées, chacune, entre deux rainures 11 ont une forme parallélépipédique. Les parties externes 12 peuvent être semblables à des bandes. Les parties externes 12 présentent deux arêtes 13, 14 s'étendant le long de l'axe longitudinal A. Les rainures 11 favorisent l'écoulement des fibres de renfort écartées de la matière du support 4 lors de l'introduction du dispositif 1 au sein du support 4, comme illustré à la figure 7. Les rainures 11 permettent en outre d'augmenter la surface extérieure du tronçon de dégagement 10 en contact avec la matière du support 4. Les rainures 11 favorisent l'introduction du dispositif 1 en limitant un refoulement de matière vers l'avant du dispositif 1, c'est-à-dire vers l'extrémité distale 3 du dispositif 1. Par ailleurs, lors de l'introduction du dispositif 1 au sein du support 4, la matière du support 4 située en avant du dispositif 1 est repoussée radialement par l'extrémité distale 3. La matière repoussée est évacuée par les rainures 11 le long du tronçon de dégagement 10.

De manière générale, le dispositif 1 peut en outre comprendre une tête d'appui 16 adjacente au fût 2 et située au niveau de l'extrémité proximale 9, c'est-à-dire située à l'opposé de l'extrémité distale 3. Avantageusement, la tête d'appui 16 s'étend radialement par rapport à l'axe longitudinal A. En d'autres termes, la tête d'appui 16 s'étend le long d'un axe transverse B perpendiculaire à l'axe longitudinal A.

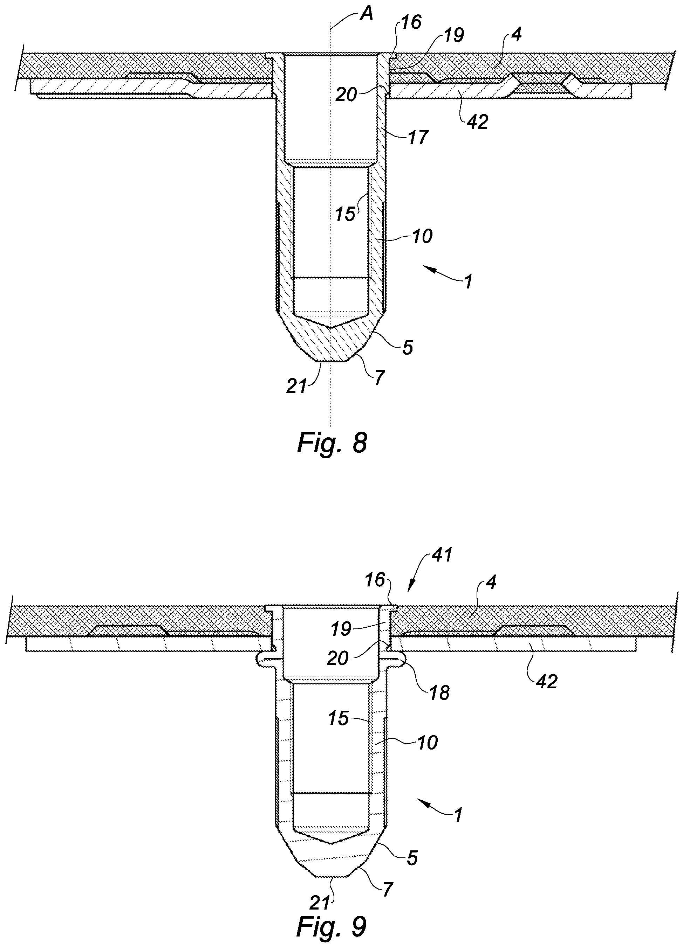

Selon une variante, le fût 2 comporte un tronçon de sertissage 17, déformable pour former un bourrelet de sertissage 18, lors d'une opération de sertissage du dispositif de fixation 1 sur le support 4, comme illustré à la figure 9. Le tronçon de sertissage 17 s'étend entre la tête d'appui 16 et le tronçon de dégagement 10.

En outre, le fût 2 peut comporter un tronçon de séparation 19 s'étendant entre la tête d'appui 16 et le tronçon de sertissage 17. Par ailleurs, le fût 2 peut comporter un épaulement 20 formé entre le tronçon de séparation 19 et le tronçon de sertissage 17. Avantageusement, l'épaisseur du tronçon de séparation 19 est supérieure à celle du tronçon de sertissage 17. Ainsi, le tronçon de séparation 19 est moins facilement déformable que le tronçon de sertissage 17 et favorise le sertissage du dispositif 1. La hauteur du tronçon de séparation 19 est adaptée à l'épaisseur du support 4, de manière que, lors du sertissage du dispositif 1, le support 4 soit coincé entre la tête d'appui 16 et le bourrelet de sertissage 18, comme illustré sur la figure 9.

La tête d'appui 16 forme une collerette en saillie d'une surface externe du tronçon de séparation 19. Avantageusement, la tête d'appui 16 a une longueur en saillie du tronçon de séparation 19 inférieure à une longueur du tronçon de séparation 19 s'étendant le long de l'axe longitudinal A. Ainsi, on réduit la longueur radiale de la tête d'appui 16 pour éviter le tassement en surépaisseur des fibres de renfort qui pourraient s'accumuler autour du dispositif 1 lors de l'opération de perçage ou de perforation du support 4. Une surépaisseur des fibres de renfort serait défavorable à l'assemblage du dispositif 1 avec le support 4, car elle pourrait décaler la position du dispositif 1 par rapport à un axe perpendiculaire au support 4, ce qui pourrait nuire à un sertissage ultérieur du dispositif 1 au support 4.

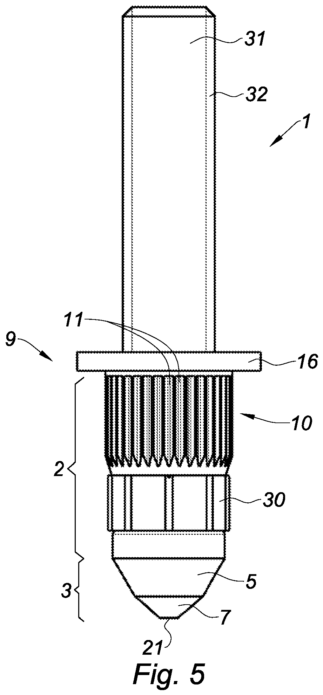

La figure 5 illustre un exemple dont le dispositif 1 est plein, et dans ce cas il ne comporte pas un tronçon de sertissage 17. Selon ce mode de réalisation, le fût 2 comporte un tronçon anti-rotation 30 s'étendant entre le premier tronçon 5 et le tronçon de dégagement 10. En outre, le dispositif 1 comporte un tronçon d'extrémité 31 situé au niveau de son extrémité proximale 9. En d'autres termes le tronçon d'extrémité 31 s'étend depuis la tête d'appui 16 dans la direction opposée au tronçon de dégagement 10. En outre le tronçon d'extrémité 31 peut comporter un filetage externe 32 et le dispositif 1 est une vis ou un goujon.

Selon l'invention, le fût 2 est creux. Le tronçon de dégagement 10 comporte un filetage interne 15, comme illustré sur les figures 6 à 9, le dispositif est alors un écrou. Par exemple, le filetage interne 15 s'étend sur une partie d'une surface intérieure du tronçon de dégagement 10. Préférentiellement, le filetage interne 15 s'étend uniquement sur la surface intérieure du tronçon de dégagement 10. Préférentiellement, le fût 2 est creux et le dispositif 1 est borgne, c'est-à-dire que le deuxième tronçon 7 est fermé. Selon le premier mode de réalisation, illustré sur les figures 1, 2 ; 5 à 9, et selon le deuxième mode de réalisation, illustré sur les figures 3 et 4, le deuxième tronçon 7 comporte une surface d'extrémité 21 s'étendant radialement par rapport à l'axe longitudinal A, pour fermer le deuxième tronçon 7. En d'autres termes, une droite normale à la surface d'extrémité 21 est parallèle à l'axe longitudinal A. Préférentiellement, la surface d'extrémité 21 est plane, et dans ce cas, elle permet de limiter les ruptures des fibres de renfort du support, par rapport à une extrémité pointue classique. En outre, elle protège les utilisateurs qui manipulent le dispositif 1, et les empêche de se blesser.

Selon le troisième mode de réalisation, illustré sur la figure 3b, le dispositif 1 le fût 2 est creux et le dispositif 1 est borgne. Les surfaces extérieures des premier et deuxième tronçons 5, 7 s'évasent selon une direction opposée à l'extrémité proximale 9. En outre, le premier tronçon 5 est tronconique et le deuxième tronçon 7 est conique dont le sommet est noté par la référence 23. Dans ce cas, l'extrémité distale 3 est pointue et située à l'intérieure du fût 2. La pointe de l'extrémité distale 3 ne peut pas blesser un utilisateur qui manipule le dispositif 1.

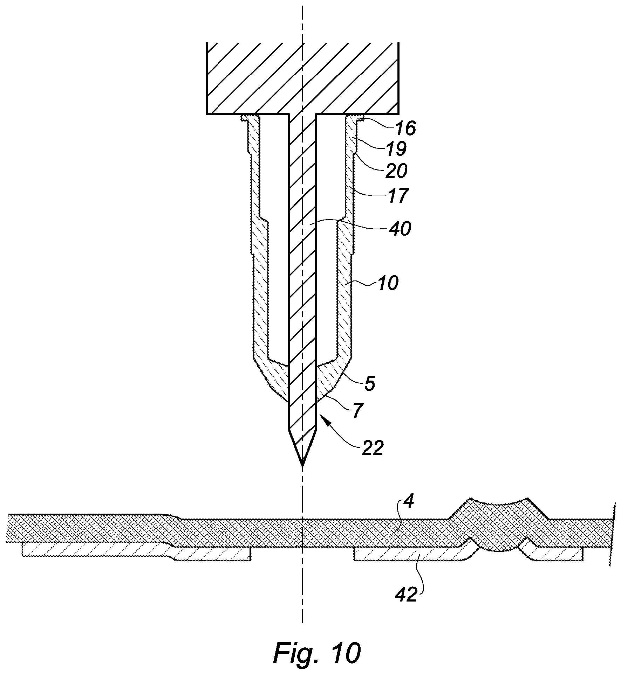

Selon encore un autre mode de réalisation, illustré sur la figure 10, le dispositif 1 est creux et un orifice traversant 22 peut être formé au sein de l'extrémité distale 3. L'orifice traversant 22 est conformé pour recevoir une broche 40 pour percer le support 4.

Le dispositif 1 peut être réalisé en une seule pièce monobloc. Le dispositif 1 peut être métallique ou réalisé en matériau thermoplastique.

Sur les figures 6 à 9, on a représenté les principales étapes d'un procédé de fabrication d'un ensemble de fixation 41. L'ensemble de fixation 41 comporte le support 4 et le dispositif de fixation 1 monté sur le support 4. L'ensemble de fixation 41 est destiné à recevoir une pièce fixée sur le dispositif 1.

Sur la figure 6, on place le dispositif 1 en regard d'un premier côté du support 4, prêt à être introduit au sein du support 4. Le support 4 peut comporter une plaque de renfort 42 située d'un deuxième côté opposé au premier côté. Sur la figure 7, on perce le support 4 avec le dispositif 1. De préférence on utilise un moule pour maîtriser la pression exercée sur le support 4. Lors du perçage, la matière du support 4 est écarté par l'extrémité distale 3 du dispositif 1, puis la matière écartée est évacuée par les rainures 11 du tronçon de dégagement 10. Le dispositif 1 est introduit au sein du support 4, jusqu'à ce que la tête d'appui 16 du dispositif 1 soit en contact avec le premier côté du support 4, comme illustré sur la figure 8. Avantageusement, le procédé peut comprendre un chauffage du support 4 lors de l'introduction du dispositif de fixation 1 au sein du support 4, afin de faciliter la pénétration du dispositif 1. Puis, lorsque le dispositif 1 comporte un tronçon de sertissage 17, on sertit le dispositif 1 au support 4, en déformant le tronçon de sertissage 17 de manière à créer le bourrelet de sertissage 18 et pour coincer le support 4 entre la tête d'appui 16 et le bourrelet 18, comme illustré sur la figure 9. Le sertissage du dispositif 1 permet de fixer efficacement le dispositif 1 au support 4, en augmentant la tenue du dispositif 1 à l'arrachement.

Sur la figure 10, on a représenté un autre mode de mise en oeuvre du procédé de fabrication de l'ensemble de fixation 41. Dans cet autre mode, une broche 40, animée ou non en rotation, passe à travers l'orifice traversant 22 du dispositif 1. La broche 40 initialise le perçage du support 4, et l'extrémité distale 3 du dispositif 1 vient en contact de la matière du support 4 écarté par la broche 40. L'extrémité 3 participe au perçage et écarte également la matière du support 4.

Le dispositif de fixation qui vient d'être décrit permet d'améliorer la tenue mécanique d'un insert avec un support en matériau composite. L'insert est particulièrement adapté dans le domaine de l'automobile, l'aéronautique et l'aérospatial.

## Revendications

1. Dispositif de fixation, comprenant un fût (2) s'étendant le long d'un axe longitudinal (A) et une extrémité distale (3) comportant un premier tronçon (5) adjacent au fût (2) et ayant une surface extérieure inclinée selon un premier angle (6) par rapport à l'axe longitudinal (A), dans lequel l'extrémité distale (3) comporte un deuxième tronçon (7) adjacent au premier tronçon (5) et ayant une surface extérieure inclinée selon un deuxième angle (8) par rapport à l'axe longitudinal (A), les surfaces extérieures respectives des premier et deuxième tronçons (5, 7) s'évasant selon une même direction et les premier et deuxième angles (6, 8) ayant des valeurs respectives différentes,
**caractérisé en ce que** le fût (2) comporte un tronçon de dégagement (10), des rainures (11) s'étendant le long de l'axe longitudinal (A) étant formées sur une surface extérieure du tronçon de dégagement (10) et **en ce que** le fût (2) est creux et le tronçon de dégagement (10) comporte un filetage (15) situé sur une surface intérieure du tronçon de dégagement (10).

2. Dispositif de fixation selon la revendication 1, dans lequel les premier et deuxième tronçons (5, 7) ont une surface extérieure tronconique.

3. Dispositif de fixation selon la revendication 2, dans lequel les surfaces extérieures tronconiques des premier et deuxième tronçons (5, 7) s'évasent en direction du fût (2) et le deuxième angle (8) est strictement supérieur au premier angle (6).

4. Dispositif de fixation selon la revendication 2, comportant une extrémité proximale (9) opposée à l'extrémité distale (3), les surfaces extérieures tronconiques des premier et deuxième tronçons (5, 7) s'évasant selon une direction opposée à l'extrémité proximale (9) et le deuxième angle (8) étant strictement inférieur au premier angle (6).

5. Dispositif de fixation selon l'une quelconque des revendications 1 à 4, comportant une tête d'appui (16) adjacente au fût (2) et située à l'opposé de l'extrémité distale (3), le fût (2) comportant, un tronçon de sertissage (17) s'étendant entre la tête d'appui (16) et le tronçon de dégagement (10) et étant déformable pour former un bourrelet de sertissage (18), un tronçon de séparation (19) s'étendant entre la tête d'appui (16) et le tronçon de sertissage (17), et un épaulement (20) formé entre le tronçon de séparation (19) et le tronçon de sertissage (17).

6. Dispositif de fixation selon la revendication 5, dans lequel la tête d'appui (16) s'étend radialement par rapport à l'axe longitudinal (A) et a une longueur en saillie du tronçon de séparation (19) inférieure à une longueur du tronçon de séparation (19) s'étendant le long de l'axe longitudinal (A).

7. Dispositif de fixation selon l'une des revendications 1 à 6, dans lequel un orifice traversant (22) est formé au sein de l'extrémité distale (3).

8. Ensemble de fixation comprenant un support (4) et un dispositif de fixation (1) selon l'une des revendications 1 à 7 monté sur le support (4).

9. Procédé de fabrication d'un ensemble selon la revendication 8, comprenant un perçage du support (4) de l'ensemble par une introduction du dispositif de fixation (1) de l'ensemble au sein du support (4).

10. Procédé selon la revendication 9, dans lequel le perçage comporte un chauffage du support (4) de l'ensemble.

## Patentansprüche

1. Befestigungsvorrichtung, umfassend einen Schaft (2), der sich entlang einer Längsachse (A) erstreckt, und ein distales Ende (3), das einen ersten Abschnitt (5) aufweist, der am Schaft (2) angrenzt und eine Außenfläche hat, die relativ zur Längsachse (A) in einem ersten Winkel (6) geneigt ist, wobei das distale Ende (3) einen zweiten Abschnitt (7) aufweist, der am ersten Abschnitt (5) angrenzt und eine Außenfläche hat, die relativ zur Längsachse (A) in einem zweiten Winkel (8) geneigt ist, wobei die jeweiligen Außenflächen des ersten und des zweiten Abschnitts (5, 7) sich in eine gleiche Richtung aufweiten und der erste und der zweite Winkel (6, 8) jeweils unterschiedliche Werte haben, **dadurch gekennzeichnet, dass** der Schaft (2) einen Räumabschnitt (10) umfasst, wobei auf einer Außenfläche des Räumabschnitts (10) Nuten (11) ausgebildet sind, die sich entlang der Längsachse (A) erstrecken, und dadurch, dass der Schaft (2) hohl ist und der Räumabschnitt (10) ein Gewinde (15) aufweist, das auf einer Innenfläche des Räumabschnitts (10) angeordnet ist

2. Befestigungsvorrichtung nach Anspruch 1, wobei der erste und der zweite Abschnitt (5, 7) eine kegelstumpfförmige Außenfläche haben.

3. Befestigungsvorrichtung nach Anspruch 2, wobei die kegelstumpfförmigen Außenflächen des ersten und des zweiten Abschnitts (5, 7) sich in Richtung des Schafts (2) aufweiten und der zweite Winkel (8) größer als der erste Winkel (6) ist.

4. Befestigungsvorrichtung nach Anspruch 2, umfassend ein proximales Ende (9), das dem distalen Ende (3) entgegengesetzt ist, wobei die kegelstumpfförmigen Außenflächen des ersten und des zweiten Abschnitts (5, 7) sich in einer dem proximalen Ende (9) entgegengesetzten Richtung aufweiten und der zweite Winkel (8) kleiner als der erste Winkel (6) ist.

5. Befestigungsvorrichtung nach einem der Ansprüche 1 bis 4, umfassend einen Stützkopf (16), der am Schaft (2) angrenzt und dem distalen Ende (3) gegenüberliegend angeordnet ist, wobei der Schaft (2) umfasst: einen Crimpabschnitt (17), der sich zwischen dem Stützkopf (16) und dem Räumabschnitt (10) erstreckt und verformbar ist, um einen Crimp-Wulst (18) zu bilden, einen Trennabschnitt (19), der sich zwischen dem Stützkopf (16) und dem Crimpabschnitt (17) erstreckt, und eine Schulter (20), die zwischen dem Trennabschnitt (19) und dem Crimpabschnitt (17) ausgebildet ist.

6. Befestigungsvorrichtung nach Anspruch 5, wobei der Stützkopf (16) sich radial zur Längsachse (A) erstreckt und eine vom Trennabschnitt (19) vorspringende Länge hat, die kleiner als eine sich entlang der Längsachse (A) erstreckende Länge des Trennabschnitts (19) ist.

7. Befestigungsvorrichtung nach einem der Ansprüche 1 bis 6, in welchem innerhalb des distalen Endes (3) eine Durchgangsöffnung (22) ausgebildet ist.

8. Befestigungsanordnung, umfassend einen Träger (4) und eine auf dem Träger (4) montierte Befestigungsvorrichtung (1) nach einem der Ansprüche 1 bis 7.

9. Verfahren zur Herstellung einer Befestigungsanordnung nach Anspruch 8, umfassend ein Durchbohren des Trägers (4) der Anordnung durch Einführen der Befestigungsvorrichtung (1) der Anordnung in das Innere des Trägers (4).

10. Verfahren nach Anspruch 9, wobei das Durchbohren ein Erhitzen des Trägers (4) der Anordnung umfasst.

## Claims

1. A fastening device, comprising a shank (2) extending along a longitudinal axis (A) and a distal end (3) comprising a first section (5) adjacent to the shank (2) and having an outer surface inclined at a first angle (6) to the longitudinal axis (A) wherein the distal end (3) comprises a second section (7) adjacent to the first section (5) and having an outer surface inclined at a second angle (8) with respect to the longitudinal axis (A), the respective outer surfaces of the first and second sections (5, 7) flaring in a same direction and the first and second angles (6, 8) having respective different values,
**characterized in that** the shaft (2) has a relief section (10), grooves (11) extending along the longitudinal axis (A) being formed on an outer surface of the relief section (10), and **in that** the shank (2) is hollow and the relief section (10) has a thread (15) located on an inner surface of the relief section (10).

2. The fastening device according to claim 1, wherein the first and second sections (5, 7) have a frustoconical outer surface.

3. The fastening device according to claim 2, wherein the frustoconical outer surfaces of the first and second sections (5, 7) flare toward the shank (2) and the second angle (8) is strictly greater than the first angle (6).

4. The fastening device according to claim 2, comprising a proximal end (9) opposite to the distal end (3), the frustoconical outer surfaces of the first and second sections (5, 7) flare in a direction away from the proximal end (9) and the second angle (8) is strictly less than the first angle (6).

5. The fastening device according to any one of claims 1 to 4, comprising a support head (16) adjacent to the shank (2) and located opposite the distal end (3), the shank (2) comprising, a crimping section (17) extending between the support head (16) and the relief section (10) and being deformable to form a crimping bead (18), a separation section (19) extending between the support head (16) and the crimping section (17), and a shoulder (20) formed between the separation section (19) and the crimping section (17).

6. The fastening device according to claim 5, wherein the support head (16) extends radially with respect to the longitudinal axis (A) and has a length projecting from the separation section (19) that is less than a length of the separation section (19) extending along the longitudinal axis (A).

7. The fastening device according to any of claims 1 to 6, wherein a through hole (22) is formed within the distal end (3).

8. A fastening assembly comprising a holder (4) and a fastening device (1) according to any of claims 1 to 7 mounted on the holder (4).

9. A method of making an assembly according to claim 8, comprising drilling the holder (4) of the assembly by inserting the fastening device (1) of the assembly within the holder (4).

10. The method according to claim 9, wherein the drilling comprises heating the holder (4) of the assembly.
